# EUROPEAN PATENT APPLICATION

(11) **EP 4 716 002 A1**
(43) Date of publication of application: **25.03.2026**
(21) Application number: 24907858.5
(22) Date of filing: 28.11.2024
(51) Int. Cl.: H01M 50/581, H01M 50/586, H01M 50/486, H01M 4/134, H01M 10/052

(54) **BATTERY CELL**

(30) Priority: 22.12.2023 KR 20230190038
(71) Applicant: LG Energy Solution, Ltd., Seoul 07335 (KR)
(72) Inventor: LEE, Jaehyun, Daejeon 34122 (KR); LEE, Jong Yoon, Daejeon 34122 (KR)
(74) Representative: Goddar, Heinz J.
(86) International application number: PCT/KR2024/019167
(87) International publication number: WO 2025/135573

(57) **Abstract**

Provided is a battery cell comprising: at least one first electrode plate; at least one second electrode plate having the opposite polarity of the at least one first electrode plate; at least one separator disposed between the at least one first electrode plate and the at least one second electrode plate; and at least one insulation member mounted on the at least one first electrode plate, wherein the at least one insulation member includes a non-adhesive surface in contact with the at least one first electrode plate.

## Description

### Technical Field

The present disclosure relates to a battery cell.

### Background Art

Secondary batteries may be charged and discharged unlike primary batteries, and thus, may be applied to various fields such as digital cameras, mobile phones, laptops, hybrid cars, and electric vehicles. The secondary batteries include a nickel-cadmium battery, a nickel-metal hydride battery, a nickel-hydrogen battery, and a lithium ion battery, which is widely used recently.

Generally, the secondary batteries (hereinafter referred to as a battery cell) including the lithium ion battery may have a structure where an electrode assembly, in which one or more positive electrode plates and one or more negative electrode plates are stacked alternately with a separator in between, is accommodated within a case.

In the charging and discharging processes of a battery cell, the internal temperature of the battery cell increases, but when the internal temperature increases to a predetermined level or above (for example, a temperature greater than or equal to 130 degrees Celsius (°C)), a shrinkage phenomenon of a separator for separating a negative electrode and a positive electrode from each other frequently occurs. In this case, as the separator shrinks, the negative electrode and the positive electrode come into contact with each other, which may lead to an electrical short circuit and to the occurrence of ignition and explosion phenomena.

In particular, in a lithium-sulfur battery (Li-S battery) or a lithium metal battery (Li-Metal battery), which are the next-generation batteries, a negative electrode may be composed of lithium metal itself, and in this case, there is a problem in that lithium metal with high reactivity comes into contact with an electrode plate of opposite polarity during the occurrence of the separator shrinkage phenomenon, causing a thermal runaway phenomenon of the battery cell.

### Detailed Description of the Invention

### Technical Goals

The present disclosure is conceived to solve at least some of the above-described problems in the related art and provides a battery cell having a structure in which a negative electrode plate and a positive electrode plate may not short-circuit with each other even though a separator shrinkage phenomenon occurs in an environment of high temperature (for example, 130 °C).

In addition, the present disclosure provides a battery cell that may solve a problem of a decrease in a capacity of the battery cell due to an insulating area formed on an electrode plate.

### Technical solutions

To achieve the above goals, according to example embodiments, provided is a battery cell including one or more first electrode plates, one or more second electrode plates having opposite polarity to the one or more first electrode plates, one or more separators disposed between the one or more first electrode plates and the one or more second electrode plates, and one or more insulating members seated on the one or more first electrode plates, and the one or more insulating members include a non-adhesive surface in contact with the one or more first electrode plates.

According to an example embodiment, at least a portion of the one or more first electrode plates may be made of lithium or an alloy including lithium.

According to an example embodiment, the non-adhesive surface of the one or more insulating members may be in contact with a portion made of lithium or an alloy including lithium in the one or more first electrode plates.

According to an example embodiment, an entire portion in contact with the one or more first electrode plates in the one or more insulating members may be formed as the non-adhesive surface.

According to an example embodiment, the insulating member may be composed of at least one of polyimide, polyprophylene, polyvinyl chloride, polyester, polyacetal, polyolefin, and polyethylene.

According to an example embodiment, the one or more first electrode plates may include one or more masking parts on which the one or more insulating members are seated and an exposed part which is exposed to the separator, and the one or more masking parts may be formed along at least one edge of the one or more first electrode plates.

According to an example embodiment, the one or more insulating members may have a loop-type structure in which a first insulating part facing one surface of the one or more first electrode plates and a second insulating part facing an opposite surface of the one surface of the one or more first electrode plates are connected continuously

According to an example embodiment, the one or more insulating members may include a first insulating member disposed along a first edge from which an electrode tab protrudes in the first electrode plate and a second insulating member disposed along a second edge opposite to the first edge of the first electrode plate.

According to an example embodiment, the one or more insulating members may further include a third insulating member and a fourth insulating member disposed along a third edge and a fourth edge, respectively, the third edge and the fourth edge are connected to the first edge and the second edge in the first electrode plate, respectively, and one end portion of each of the first to fourth insulating members may cover a portion of another insulating member adjacent to the one end portion, and an opposite end portion of the one end portion of each of the first to fourth insulating members may be covered by another insulating member adjacent to the opposite end portion.

According to an example embodiment, no adhesive material may be applied to a portion in contact with the one or more masking parts in the one or more insulating members.

According to an example embodiment, the one or more insulating members may include a fifth insulating member facing one surface of the one or more first electrode plates and a sixth insulating member facing an opposite surface of the one surface of the one or more first electrode plates, and the fifth insulating member and the sixth insulating member may be separated from each other.

According to an example embodiment, the fifth insulating member and the sixth insulating member may have a frame-type structure surrounding a perimeter of the exposed part.

According to an example embodiment, the first electrode plate may be disposed to face one surface of a separator which is zigzag-folded and the second electrode plate may be disposed to face an opposite surface of the one surface of the separator, and the one or more insulating members may include a first insulating member and a second insulating member disposed along two edges of the first electrode plate respectively and spaced apart from each other in a width direction of the separator.

### Effects of the Invention

According to the example embodiments, it is possible to implement a battery cell having a structure in which a negative electrode plate and a positive electrode plate may not short-circuit with each other even though a separator shrinkage phenomenon occurs in an environment of high temperature (in particular, 130°C).

Further, according to the example embodiments, it is possible to provide a battery cell in which a capacity of the battery cell is not decreased even though a masking part is formed in at least a portion of an area of an electrode plate so as not to short-circuit with an electrode plate of opposite polarity.

### Brief Description of Drawings

FIG. 1 is an exploded perspective view of a battery cell according to an example embodiment.
FIG. 2 is a reference diagram showing a configuration of an electrode assembly included in a battery cell.
FIG. 3 is an example cross-sectional view taken along I-I' of FIG. 2.
FIG. 4 is an exploded perspective view of a first electrode plate assembly according to an example embodiment.
FIG. 5 is an exploded perspective view of a first electrode plate assembly according to another example embodiment.
FIG. 6 is a reference diagram showing a configuration of an electrode assembly according to another example embodiment.
FIG. 7 is an exploded perspective view of a first electrode plate assembly illustrated in FIG. 6.
FIG. 8 illustrates graphs showing a temperature change in each electrode assembly when heating an electrode assembly according to example embodiments and an electrode assembly according to a first comparative example.
FIG. 9 is a graph showing a test result of capacity performances of a battery cell including an electrode assembly according to example embodiments and a battery cell including an electrode assembly according to a second comparative example.
FIG. 10 is a graph showing a temperature change in each electrode assembly when heating an electrode assembly according to example embodiments and the electrode assembly according to the second comparative example.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described in the specification and the configurations illustrated in the drawings are no more than the most preferred example embodiments of the present disclosure and do not fully cover the technical idea of the present disclosure. Accordingly, it should be understood that there may be various alternatives, equivalents, and modification examples when this application is filed.

Identical reference numerals or signs in each drawing attached to the specification may refer to components or elements performing substantially identical functions. For convenience of description and understanding, the same reference numeral or sign may be used for description in different example embodiments. In other words, even though elements with the same reference numeral are illustrated in a plurality of drawings, not all of the plurality of drawings may represent a single example embodiment.

In the following description, a singular expression includes a plural expression unless apparently otherwise defined by context. It should be understood that terms such as "comprise or include" and "form" are intended to indicate the presence of a feature, a number, a step, an operation, an element, a component, or a combination thereof described in the specification and not intended to exclude the possibility of the presence or addition of one or more other features, numbers, steps, operations, elements, components, or combinations thereof in advance.

In addition, expressions such as upper side, upper portion, above, lower side, lower portion, below, side surface, front surface, and rear surface are represented hereinafter with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, a using order, an arrangement sequence, or the like of an element combined with an ordinal number is not to be construed as limited by the ordinal number. In some cases, each ordinal number may also be used by replacing each other.

Hereinafter, example embodiments of the present disclosure are described with reference to the accompanying drawings. However, the present disclosure is not limited to the example embodiments described. For example, a person of ordinary skill in the art who understands the idea of the present disclosure may suggest other example embodiments included within the scope of the idea of the present disclosure through the addition, change, or deletion of an element, which are also included within the scope of the present disclosure though. The shapes, sizes, and the like of elements may be exaggerated in the drawings for clearer description.

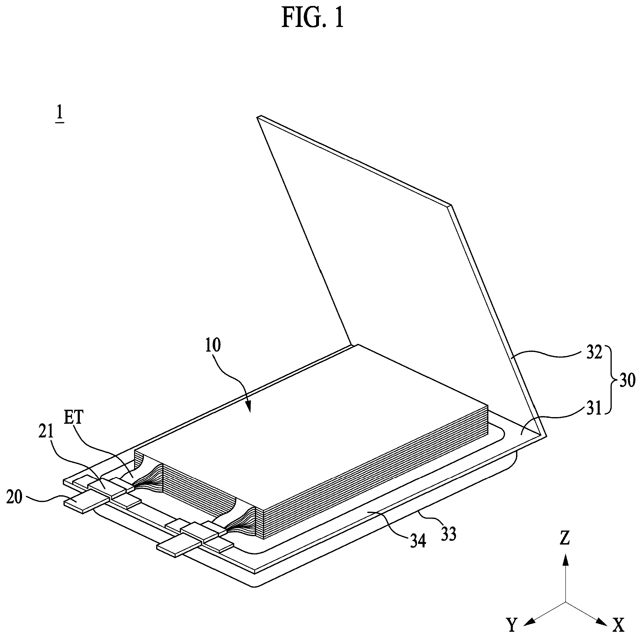

First, with reference to FIGS. 1 to 3, a configuration of a battery cell according to an example embodiment is described.

FIG. 1 is an exploded perspective view of a battery cell 1 according to example embodiments.

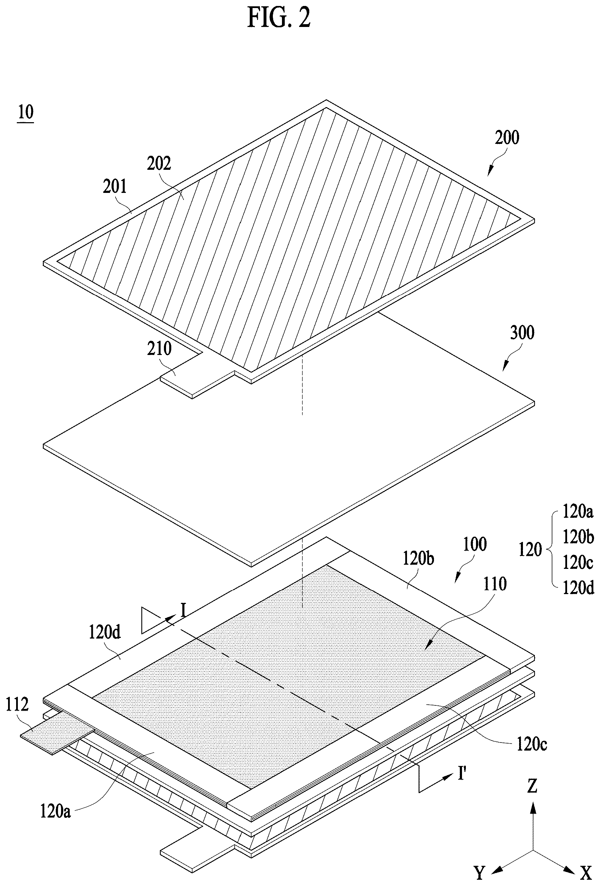

FIG. 2 is a reference diagram showing an example configuration of an electrode assembly 10 included in the battery cell 1 of FIG. 1.

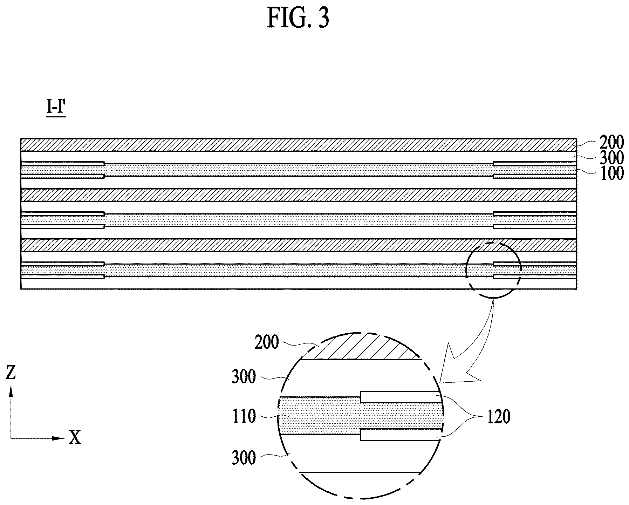

FIG. 3 is an example cross-sectional view taken along I-I' of FIG. 2.

Referring to FIG. 1, the battery cell 1 according to example embodiments may include the electrode assembly 10 in which a plurality of electrode plates are stacked, a case 30 in which the electrode assembly 10 is accommodated, and a lead tab 20 that is electrically connected to the electrode assembly 10 and of which a portion is exposed outside the case 30.

The case 30 may include an electrode accommodation part 33 in which the electrode assembly 10 is accommodated and a sealing part 34 disposed along an edge of the electrode accommodation part 33. The electrode accommodation part 33 may be formed as an upper case 32 and a lower case 31 combine vertically and may have an internal space where the electrode assembly 10 is accommodated. The sealing part 34 may be formed as edges of the upper case 32 and the lower case 31 are pressed or heat-fused along the edge of the electrode accommodation part 33 and may block an entry of external foreign substances or moisture of the case 30 into the electrode assembly 10 accommodated within the electrode accommodation part 33.

The case 30 may be the case 30 of a pouch type manufactured from a soft material. For example, the case 30 may be composed of an aluminum laminate sheet. However, in addition to the pouch-type case 30 described above, the case 30 of the battery cell 1 according to example embodiments may also be composed of a prismatic case or a cylindrical case composed of a metal material such as aluminum.

Referring to FIG. 2, the electrode assembly 10 may have a structure in which a plurality of first electrode plates 110 and a plurality of second electrode plates 200 having opposite polarity to each other are stacked with a separator 300 in between. However, those illustrated in FIG. 2 are merely some of the first electrode plates 110, the second electrode plates 200, and the separator 300 included in the electrode assembly 10, and the electrode assembly 10 may have a larger number of the first electrode plates 110, the second electrode plates 200, and the separator 300 in practice than those illustrated in FIG. 2.

The separator 300 may be interposed between the first electrode plate 110 and the second electrode plate 200 and configured to prevent an electrical short circuit between the first electrode plate 110 and the second electrode plate 200 and to be impregnated with an electrolyte so that ions may pass through. The separator 300 may be composed of a porous polymer film or a porous nonwoven fabric. However, in addition to the above materials, any material generally used in a lithium secondary battery may be used as a material of the separator 300 without particular limitation.

The first electrode plate 110 and the second electrode plate 200 may be provided with electrode tabs 112 and 210, respectively. In the following description, the electrode tab 112 of the first electrode plate 110 is defined as a first electrode tab 112, and the electrode tab 210 of the second electrode plate 200 is defined as a second electrode tab 210.

In the electrode assembly 10, a plurality of first electrode tabs 112 and a plurality of second electrode tabs 210 may be provided. A plurality of electrode tabs 112, 210 with identical polarity may gather together and form an electrode tab bundle ET. The lead tab 20 which serves as a terminal in the battery cell 1 may be coupled to the electrode tab bundle ET, and accordingly, the electrode assembly 10 and the lead tab 20 may be electrically connected to each other. Various welding manners including ultrasonic welding or a physical fastening manner using a rivet or the like may be applied to the coupling between the electrode tab bundle ET and the lead tab 20.

The lead tab 20 may be composed of a conductive metal material. For example, the lead tab 20 may be composed of nickel (Ni), copper (Cu), nickel-plated copper, aluminum (Al), and the like. A sealing member 21 may be disposed between the lead tab 20 and the case 30. For example, the sealing member 21 may be composed of a material having both an insulating property and an adhesive property and may be bonded to the sealing part 34 of the case 30 while surrounding a portion of the lead tab 20 to ensure electrical insulation between the lead tab 20 and the case 30 and seal a space between the lead tab 20 and the sealing part 34.

In example embodiments, the first electrode plate 110 and the second electrode plate 200 of the electrode assembly 10 may be electrode plates having opposite polarity to each other, and for example, when the first electrode plate 110 is a negative electrode plate, the second electrode plate 200 may be a positive electrode plate.

The positive electrode plate may have a structure in which a positive electrode active material layer 202 is formed on a current collector 201. For example, referring to FIG. 2, the second electrode plate 200 may be the positive electrode plate and may be formed by applying a mixture of a positive electrode active material, a conductive material, and a binder to the current collector 201 of aluminum alloy material. In this case, any known materials used in the positive electrode plate of a lithium secondary battery may be applied to materials of the positive electrode active material, the binder, the conductive material, and the current collector 201.

The negative electrode plate of the battery cell 1 according to example embodiments, unlike an existing negative electrode plate, may also be composed of a metal sheet formed of lithium or an alloy (hereinafter briefly referred to as "lithium metal") including lithium.

In an existing case, a negative electrode plate may have a structure in which a negative electrode active material layer is formed on a current collector. For example, the negative electrode plate may be formed by applying a mixture of a negative electrode active material, a conductive material, and a binder to a current collector of copper alloy material.

In contrast, the negative electrode plate of the battery cell 1 according to example embodiments may have an integrated structure with an electrode plate body part composed of a lithium metal sheet and an electrode tab disposed at one side of the electrode plate body part. The battery cell 1 to which the negative electrode plate composed of the lithium metal sheet is applied may omit an existing negative electrode current collector composed of nickel (Ni), aluminum (Al), copper (Cu), and the like, and thus, may be not only advantageous for a weight reduction of the battery cell 1 but also have very high energy density.

The first electrode plate 110 and the second electrode plate 200 may be separated by the separator 300 and maintained in a state in no contact with each other.

However, a shrinkage phenomenon occurs frequently in the separator 300 at a high temperature of, for example, about 130 degrees Celsius (°C), and accordingly, the first electrode plate 110 and the second electrode plate 200 may come into contact and short-circuit with each other beyond an edge of the separator 300 that is shrunk. When the first electrode plate 110 and the second electrode plate 200 short-circuit with each other, the temperature of the electrode assembly 10 may rapidly increase and flames may be generated, and accordingly, a thermal runaway phenomenon of the battery cell 1 may occur.

Therefore, in order that the first electrode plate 110 and the second electrode plate 200 are not in contact with each other even though the separator 300 shrinks, the battery cell 1 according to example embodiments may further include one or more insulating members 120 disposed along at least one edge of the first electrode plate 110. For example, referring to FIGS. 2 and 3, the insulating member 120 may be disposed in a state interposed between the first electrode plate 110 and the separator 300 in the vicinity of at least one edge of the first electrode plate 110.

The insulating member 120 may be composed of an insulating material and disposed on the first electrode plate 110 to block a short circuit between the first electrode plate 110 and the second electrode plate 200 due to the contact with each other beyond the edge of the separator 300 that is shrunk.

The insulating member 120 may be composed of a polymer film. For example, the insulating member 120 may be composed of at least one of polyimide, polyprophylene, polyvinyl chloride, polyester, polyacetal, polyolefin, and polyethylene. However, a material of the insulating member 120 is not limited to those described above and may be composed of any materials that may be disposed between two different electrode plates to provide electrical insulation.

In example embodiments, the insulating member 120 may be disposed on the first electrode plate 110 to form a first electrode plate assembly 100 together with the first electrode plate 110. In other words, the electrode assembly 10 according to example embodiments may have a structure in which the first electrode plate assembly 100 and the second electrode plate 200 are disposed to be stacked alternately with the separator 300 in between.

In an existing battery cell, an insulating area covered with an insulating material may also be formed at an edge of an electrode plate. However, in this case, the insulating area is formed by applying a slurry for an insulation coating layer onto the electrode plate or formed in a manner of attaching an insulating film to the electrode plate.

According to these manners of forming the insulating area, the insulating area of the electrode plate is difficult to be involved in a battery reaction as being covered with the slurry including a binder component or an adhesive material of the insulating film, and thus, there is a problem with a decrease in the total battery cell capacity.

In addition, when a portion of the electrode plate forming an electrode assembly is composed of lithium metal, there is a problem in that it is difficult to apply the slurry for the insulation coating layer or stably attach the insulating film having the adhesive material due to the high reactivity of lithium.

In contrast, the battery cell 1 according to example embodiments may include the insulating member 120 of which at least a portion of an area in contact with the first electrode plate 110 is composed of a non-adhesive surface to prevent an edge of the first electrode plate 110 from being in contact with the second electrode plate 200 and solve the above problems simultaneously.

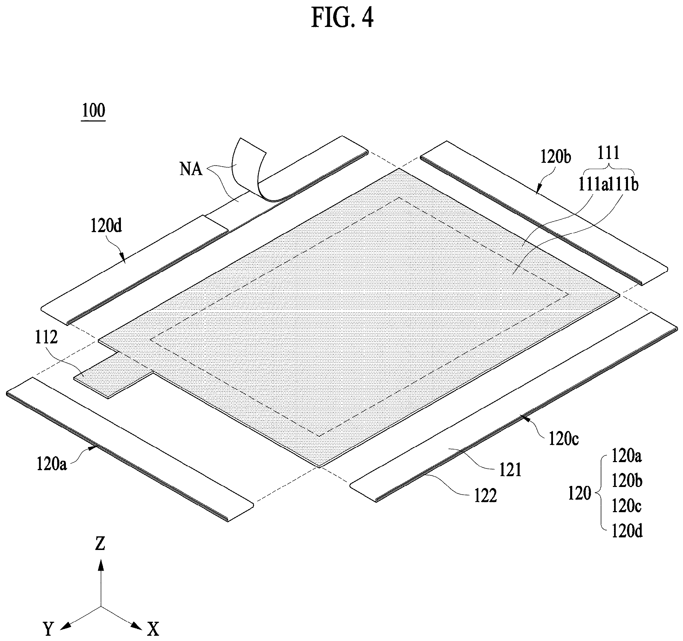

Hereinafter with reference to FIG. 4, the first electrode plate assembly 100 including the insulating member 120 according to example embodiments is described in more detail.

FIG. 4 is an exploded perspective view of a first electrode plate assembly 100 according to an example embodiment.

The first electrode plate assembly 100 described in FIG. 4 includes all characteristics of the first electrode plate assembly 100 described above through FIGS. 1 to 3, and thus, descriptions overlapping with FIGS. 1 to 3 may be omitted.

The first electrode plate assembly 100 may include the first electrode plate 110 and one or more insulating members 120 disposed on the first electrode plate 110.

The first electrode plate 110 may include an electrode plate body part 111 facing the second electrode plate 200 with the separator 300 in between and the first electrode tab 112 protruding from the electrode plate body part 111 to be connected to the lead tab 20.

As described above through FIGS. 1 to 3, the first electrode plate 110 may be composed of a lithium metal sheet. For example, both the electrode plate body part 111 and the first electrode tab 112 of the first electrode plate 110 may be composed of the lithium metal sheet. For a technical advantage when the first electrode plate 110 is fabricated with the lithium metal sheet, the above descriptions of FIGS. 1 to 3 may be referenced.

The first electrode plate assembly 100 may include one or more insulating members 120 covering a portion of the first electrode plate 110. For example, referring to FIG. 4, the insulating member 120 may be an insulating film provided in a loop-type structure to surround and cover the vicinity of one edge of the electrode plate body part 111. Here, the loop-type structure may refer to a structure in which a first insulating part 121 facing one surface of the electrode plate body part 111 and a second insulating part 122 facing an opposite surface of the one surface of the electrode plate body part 111 are connected continuously at both ends of a length direction. For example, the loop-type structure may be formed by bending an insulating film of a long band shape and connecting one end portion of the insulating film to another end portion. Accordingly, the insulating member 120 of the loop-type structure may have a structure of extending continuously in the length direction (for example, an X-axis direction with respect to a first insulating member 120a or a Y-axis direction with respect to a third insulating member 120c) and being provided with a slit or a hole through which the first electrode plate 110 may be inserted in a width direction (for example, the Y-axis direction with respect to the first insulating member 120a or the X-axis direction with respect to the third insulating member 120c.

Alternatively, the insulating member 120 of the loop-type structure may be formed as two rectangular sheets of an identical shape are bonded to each other at both ends of the length direction or may also be implemented through a process of forming a polymer resin material, which is a raw material of the insulating member 120, into a ring shape.

However, the shape, structure, and fabrication method of the insulating member 120 are not limited to the drawings and the above descriptions. The insulating member 120 may be composed of any structures that may stably cover a portion of an area of the electrode plate body part 111.

In a single first electrode plate assembly 100, a plurality of insulating members 120 may be provided. For example, as in FIG. 4, the first electrode plate assembly 100 may include four insulating members 120a, 120b, 120c, and 120d disposed along four edges of the electrode plate body part 111.

As the insulating member 120 covers a portion of the electrode plate body part 111, the electrode plate body part 111 may be divided into a masking part 111a covered by the insulating member 120 and an exposed part 111b directly exposed to the separator 300, as not covered by the insulating member 120.

The masking part 111a may be formed along at least one edge of the electrode plate body part 111 to correspond to a location where the insulating member 120 is disposed. For example, referring to FIG. 4, as the first to fourth insulating members 120a, 120b, 120c, and 120d are disposed along the four edges of the electrode plate body part 111, the masking part 111a may be formed along the four edges of the electrode plate body part 111, and the exposed part 111b may be formed therebetween.

However, a difference from the exposed part 111b is present in that the masking part 111a is covered by the insulating member 120 may differ from the exposed part 111b, and no difference may be present in a material configuration from the exposed part 111b.

In the insulating member 120, at least a portion of an area facing the masking part 111a may be composed of a non-adhesive surface NA where no adhesive material is present. For example, in the loop-type insulating member 120 illustrated in FIG. 4, an inner surface in contact with the masking part 111a of the first electrode plate 110 may be entirely composed of the non-adhesive surface NA, and accordingly, the insulating member 120 may be seated on the first electrode plate 110 in a state of being in contact with but not adhering to the masking part 111a.

As above, as a portion in contact with the first electrode plate 110 is formed of the non-adhesive surface NA, no separate adhesive material may be present on the masking part 111a of the first electrode plate 110.

In particular, when the first electrode plate 110 is composed of lithium metal having high reactivity, a problem may occur in that an adhesive material is in contact with lithium to interfere with the involvement of lithium of a corresponding area in a battery reaction or to contaminate lithium, but the insulating member 120 according to example embodiments may be seated on lithium metal of the first electrode plate 110 through the non-adhesive surface NA to prevent this problem in advance.

In other words, the insulating member 120 according to example embodiments may be seated on the masking part 111a of the first electrode plate 110 through the non-adhesive surface NA to prevent the contact and short-circuits between the first electrode plate 110 and the second electrode plate 200 in a situation of the shrinkage of the separator 300, and simultaneously, may prevent a decrease in the reactivity of the first electrode plate 110 due to the insulating member 120. Accordingly, an entire area of the electrode plate body part 111 of the first electrode plate 110 may be involved in the battery reaction, which thus may prevent a decrease in the capacity of the battery cell 1 and maximize the energy density of the battery cell 1.

In addition, as a portion in contact with the masking part 111a in the insulating member 120 is formed of the non-adhesive surface NA, a process of assembling the insulating member 120 and the first electrode plate 110 on each other may be performed more rapidly and easily than an existing process of applying a slurry or attaching an adhesive insulating film. For example, when the insulating member 120 has the loop-type structure as in FIG. 4, the masking part 111a may be formed simply by mounting the insulating member 120 on an edge of the first electrode plate 110 and adjusting a location. In this case, there is also an advantage in that the masking part 111a may be easily formed on both surfaces in the vicinity of one edge of the first electrode plate 110 through one loop-type insulating member 120.

Meanwhile, in the insulating member 120, even though no adhesive material is present on a portion in contact with the first electrode plate 110, the insulating member 120 may be stably maintained in a state seated on the masking part 111a of the first electrode plate 110 by stacking pressure formed in a stacking process of the electrode assembly 10.

When the plurality of insulating members 120 are provided, one insulating member (for example, 120a) may cover a portion of another insulating member (for example, 120d). For example, referring to FIGS. 2 and 4 together, the first electrode plate assembly 100 may include the first insulating member 120a disposed along one edge (hereinafter referred to as a first edge) from which the electrode tab 112 protrudes in the electrode plate body part 111, the second insulating member 120b disposed along an opposite edge (hereinafter referred to as a second edge) of the one edge, and the third insulating member 120c and the fourth insulating member 120d disposed along two edges (hereinafter referred to as a third edge and a fourth edge) connected to each of the first edge and the second edge. In this case, as illustrated in FIG. 2, a plurality of insulating members 120a, 120b, 120c, and 120d may be disposed to sequentially cover a portion of a surface of another adjacent insulating member 120 clockwise (or counterclockwise). In other words, the first insulating member 120a may be disposed to cover a portion of a surface of the fourth insulating member 120d, the fourth insulating member 120d may be disposed to cover a portion of a surface of the second insulating member 120b, the second insulating member 120b may be disposed to cover a portion of a surface of the third insulating member 120c, and the third insulating member 120c may be disposed to cover a portion of a surface of the first insulating member 120a.

As above, a structure in which one insulating member 120 covers a portion of another adjacent insulating member 120 is defined as a "cross arrangement structure."

According to the cross arrangement structure, each of the insulating members 120 disposed at the four edges of the electrode plate body part 111 may be crossed and in contact with each other to form a stable arrangement structure. In other words, while an end portion of one insulating member 120 may cover a portion of a surface of another adjacent insulating member 120 and prevent the insulating member 120 from leaving an original position, a state of the insulating members 120 in contact with each other and covering the masking part 111a may be stably maintained during the stacking and assembly of the electrode assembly 10. In addition, as the insulating members 120 of the four edges of the electrode plate body part 111 cross each other to repeat an identical structure clockwise, the occurrence of structural imbalance due to the stacking of a plurality of first electrode plate assemblies 100 may be prevented.

However, the cross arrangement structure of the insulating member 120 is not limited to those illustrated in FIG. 2. For example, unlike FIG. 2, a counterclockwise cross arrangement structure may also be provided, or a cross arrangement structure in which one of the first to fourth insulating members 120a, 120b, 120c, and 120d does not cover another insulating member may be provided.

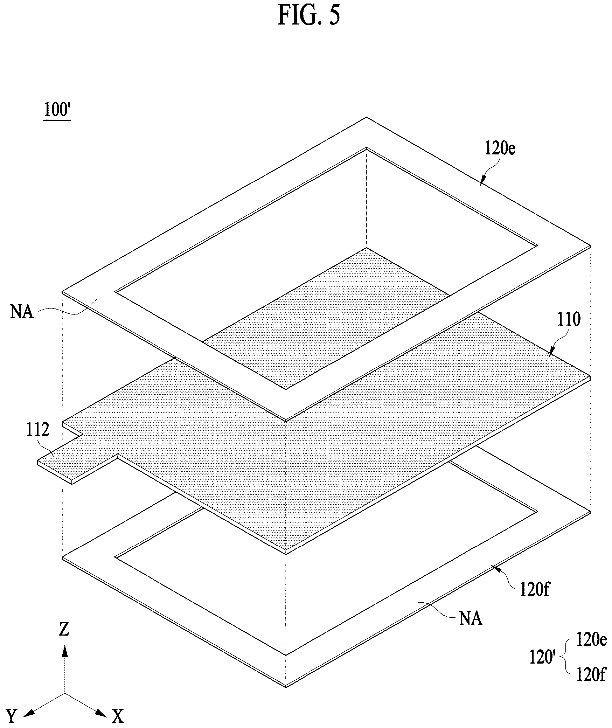

Alternatively, in another example embodiment, the insulating member may be provided in various shapes other than the loop-type structure described above. Hereinafter with reference to FIG. 5, a first electrode plate assembly to which another type of insulating member is applied as above is described.

FIG. 5 is an exploded perspective view of a first electrode plate assembly 100' according to another example embodiment.

Other characteristics excluding a shape of an insulating member 120' in the first electrode plate assembly 100' according to the example embodiment described in FIG. 5 are identical to the characteristics of the first electrode plate assembly 100 described above through FIGS. 1 to 4, and thus, overlapping descriptions may be omitted.

The first electrode plate assembly 100' may include a plurality of insulating members 120', each seated individually on one surface and another surface of the first electrode plate 110. For example, as in FIG. 5, a fifth insulating member 120e having a frame-type structure may be disposed on one surface of the first electrode plate 110, and a sixth insulating member 120f having a frame-type structure may be disposed on an opposite surface of the one surface of the first electrode plate 110.

In a process of stacking and assembling an electrode assembly, the fifth insulating member 120e and the sixth insulating member 120f may be stacked and assembled in sequence with the first electrode plate 110 disposed in between and may be maintained in a state seated on the masking part 111a of the first electrode plate 110 by stacking pressure of the electrode assembly.

The fifth insulating member 120e and the sixth insulating member 120f are different only in shape from the first to fourth insulating members 120a, 120b, 120c, and 120d described above through FIGS. 1 to 4, and other characteristics such as a material and an arrangement of the non-adhesive surface NA are all identical. For example, at least portions of areas in contact with the first electrode plate 110 in the fifth insulating member 120e and the sixth insulating member 120f may be composed of the non-adhesive surface NA, and for a technical effect according thereto, the descriptions of FIGS. 1 to 4 may be referenced.

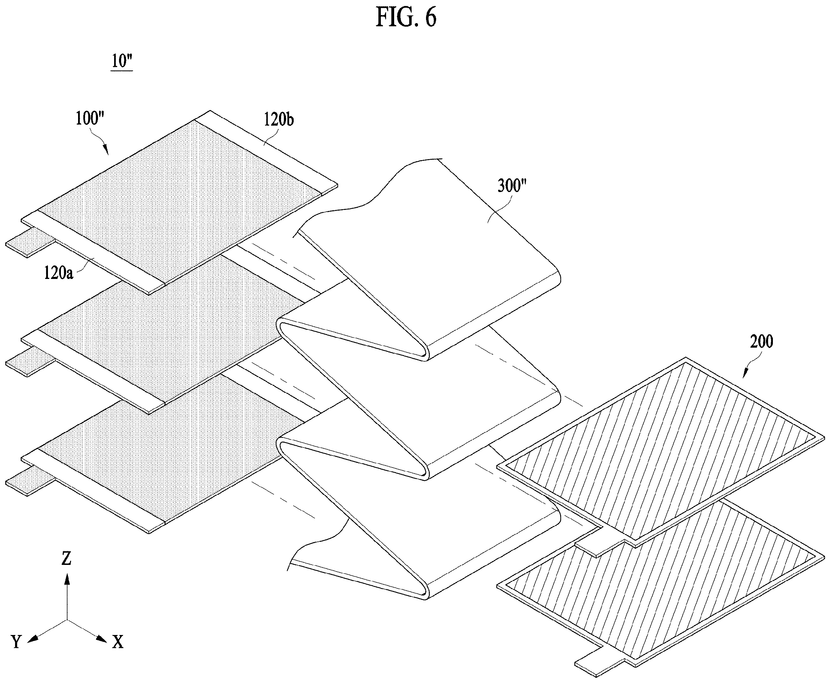

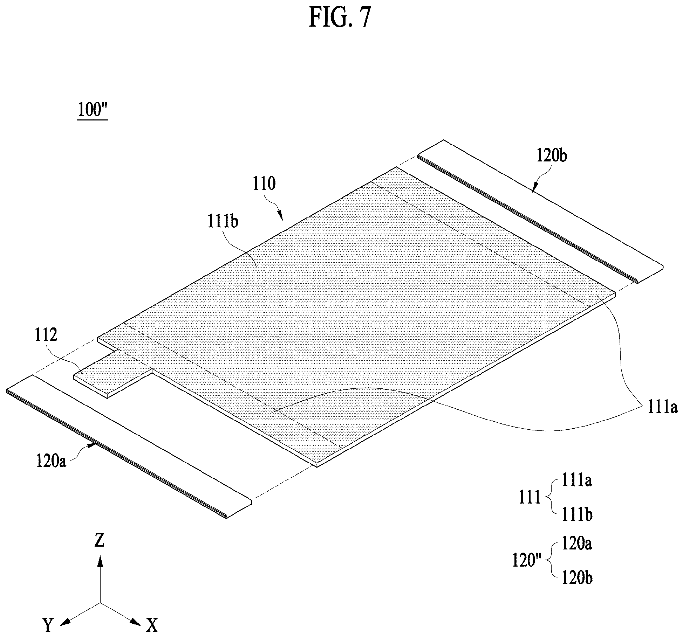

Meanwhile, in another example embodiment, an electrode assembly may have a structure in which a first electrode plate assembly and a second electrode plate are separated from each other by a continuous separator that is zigzag-folded. Hereinafter with reference to FIGS. 6 and 7, an electrode assembly according to another example embodiment is described.

FIG. 6 is a reference diagram showing a configuration of an electrode assembly 10" according to another example embodiment.

FIG. 7 is an exploded perspective view of a first electrode plate assembly 100" illustrated in FIG. 6.

Referring to FIG. 6, in a manufacturing process of the electrode assembly 10" according to another example embodiment, one or more sheets of separator 300" may be supplied continuously and zigzag-folded multiple times, and the first electrode plate assembly 100" or the second electrode plate 200 may be disposed in each folded portion to form the electrode assembly 10.

In this case, the first electrode plate assembly 100" may face one surface of the separator 300" zigzag-shaped, and the second electrode plate 200 may face an opposite surface of the one surface of the separator 300", and accordingly, the first electrode plate assembly 100" and the second electrode plate 200 may be stacked and disposed in no contact with each other with the separator 300" in between.

When the separator 300" has a zigzag structure as above, a portion in which the first electrode plate 110 and the second electrode plate 200 may come into contact with each other due to the shrinkage of the separator 300" may be a portion corresponding to an edge of a width direction (for example, the Y-axis direction of FIG. 6) of the separator 300". For example, referring to FIG. 6, as the separator 300" is formed continuously, an edge from which the electrode tab 112 protrudes in the first electrode plate 110 and an area adjacent to an opposite edge thereof may be in contact with the second electrode plate 200 in a situation of the shrinkage of the separator 300", but the remaining edge areas may have a slightly low possibility of being exposed to the second electrode plate 200.

In this case, an insulating member 120", unlike FIGS. 1 to 5 described above, may achieve an intended goal, even though being disposed only at some edges among four edges of the first electrode plate 110. In other words, the insulating member 120" may be disposed intensively in a portion that may be exposed to the second electrode plate 200 in the first electrode plate 110 as the separator 300" shrinks. For example, referring to FIGS. 6 and 7, the first insulating member 120a and the second insulating member 120b in the first electrode plate assembly 100 may be disposed along two edges corresponding to opposite sides of the first electrode plate 110 but disposed to be spaced apart in the width direction of the separator 300".

In the example embodiment described in FIGS. 6 and 7, other characteristics excluding the shape of the separator 300" and the position of the insulating member 120" may be identical to the characteristics of the battery cell 1 described above through FIGS. 1 to 5. For example, as illustrated in FIG. 7, the insulating member 120" may have a loop-type structure to cover both surfaces adjacent to one edge of the first electrode plate 110, and a portion in contact with the first electrode plate 110 may be composed of the non-adhesive surface NA.

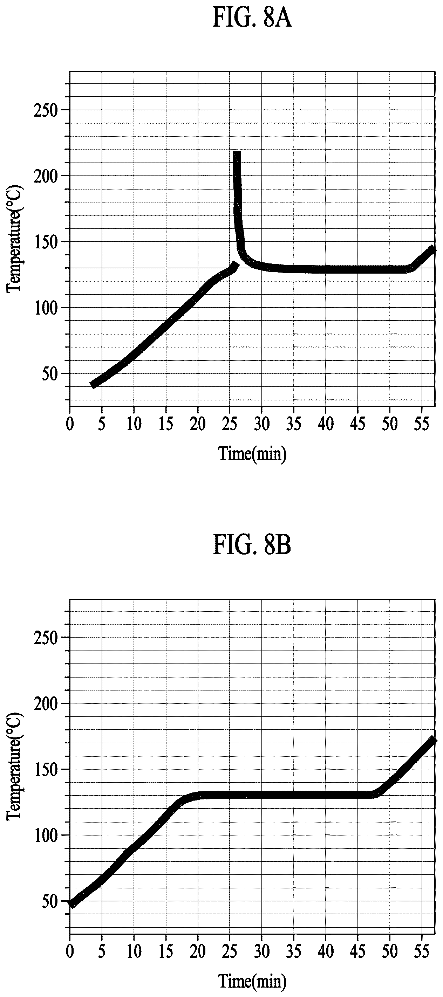

Referring to FIG. 8, it may be identified that the stability of the battery cell 1 according to example embodiments is improved as the insulating members 120, 120', and 120" described above are disposed, compared to an existing battery cell.

FIG. 8 illustrates graphs showing a temperature change in each electrode assembly when heating an electrode assembly according to example embodiments and an electrode assembly according to a first comparative example.

Graph (b) of FIG. 8 shows a temperature change in the electrode assembly 10 in a test process of heating the electrode assembly 10 according to example embodiments described in FIGS. 2 to 4 within a hot-box.

Graph (a) of FIG. 8 shows a temperature change in the electrode assembly in a test process of heating an electrode assembly according to the first comparative example within the hot-box. The electrode assembly according to the first comparative example represents the electrode assembly 10 according to example embodiments described in FIGS. 2 to 4 with the insulating member 120 omitted. In other words, the electrode assembly according to the first comparative example has a structure in which a plurality of first electrode plates 110 to which the insulating member 120 is not applied are stacked alternately with a plurality of second electrode plates 200 with the separator 300 in between.

In both graphs, a heating test condition of the hot-box is identical. Specifically, the heating test is carried out by sequentially performing a first operation of increasing a peripheral temperature of an electrode assembly placed within the hot-box at a rate of 5 °C per minute (°C/min) to 130 °C, a second operation of maintaining the peripheral temperature of the electrode assembly at 130 °C for 30 minutes, and a third operation of increasing the peripheral temperature of the electrode assembly at a rate of 5 °C/min to 250 °C.

Referring to graph (a) first, the electrode assembly according to the first comparative example sharply increases in temperature, and a flame is generated at the moment the temperature thereof reaches around 130 °C. As described above through FIGS. 1 to 7, this is because the shrinkage phenomenon of a separator occurs in the vicinity of 130 °C as the temperature of a battery cell increases, and thus, a first electrode plate and a second electrode plate come into contact and short-circuit with each other beyond an edge of the separator.

In contrast, referring to graph (b), it may be identified that the electrode assembly 10 according to example embodiments is maintained in a stable state even when heated to around 130 °C. This is because the insulating member 120 prevents direct contact between the first electrode plate 110 and the second electrode plate 200 to block the occurrence of a short circuit, even though the shrinkage phenomenon of the separator 300 occurs in the vicinity of 130 °C.

In other words, according to a test result of FIG. 8, it may be identified that the electrode assemblies 10 and 10" to which the insulating members 120, 120', and 120" according to example embodiments are applied may prevent a short circuit between electrode plates due to the shrinkage of the separators 300 and 300", even though the temperature thereof increases to 130 °C or above. Accordingly, a possibility of a thermal runaway phenomenon being generated in the battery cell 1 may be greatly lowered.

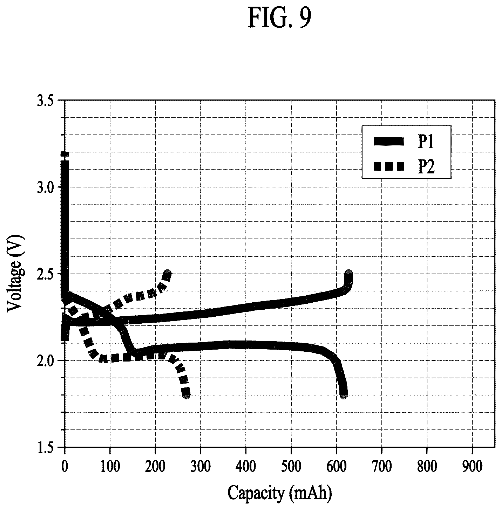

FIG. 9 is a graph showing a test result of capacity performances of a battery cell including an electrode assembly according to example embodiments and a battery cell including an electrode assembly according to a second comparative example.

In a graph of FIG. 9, P1 represents a test result value of capacity performance of a battery cell including the electrode assembly 10 according to example embodiments described in FIGS. 2 to 4, and P2 represents a test result value of capacity performance of a battery cell including an electrode assembly according to the second comparative example.

Here, the electrode assembly according to the second comparative example represents the electrode assembly 10 according to example embodiments described in FIGS. 2 to 4, in which an insulating member is changed to an adhesive insulating tape. In other words, in the electrode assembly according to the second comparative example, the insulating tape coated with an adhesive material is attached to masking parts of a plurality of first electrode plates.

In each of P1 and P2 on the graph, two branches of curves are indicated, and the curves of increasing voltage values represent a charging result value and the curves of decreasing voltage values represent a discharging result value.

As identified in the graph, it may be identified that the battery cell including the electrode assembly 10 according to example embodiments, in which a masking part is formed using an insulating member composed of a non-adhesive surface has an about 129 percent (%) increase in charging and discharging capacity, compared to the battery cell including the electrode assembly according to the second comparative example, to which the adhesive insulating tape is applied.

This is because an area of the masking part in contact with the non-adhesive surface is also smoothly involved in a battery reaction in the electrode assembly 10 of example embodiments, whereas a battery reaction is interrupted in an area of a masking part due to the adhesive material of the insulating tape in the electrode assembly of the second comparative example.

According to these test results, the electrode assembly to which the insulating member is applied according to example embodiments has superior battery cell capacity performance to the electrode assembly to which the existing adhesive insulating tape is applied.

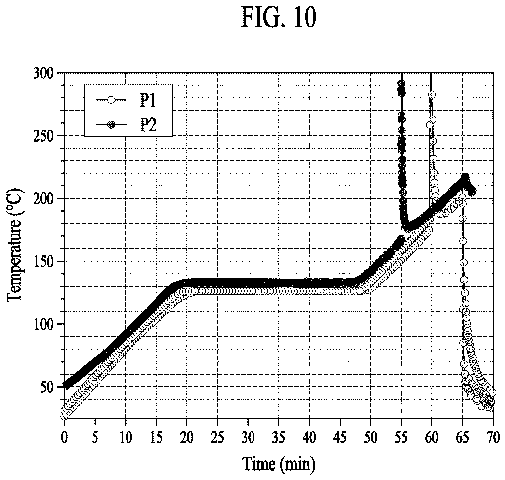

FIG. 10 is a graph showing a temperature change in each electrode assembly when heating an electrode assembly according to example embodiments and the electrode assembly according to the second comparative example.

In a graph of FIG. 10, P1 represents a temperature change in the electrode assembly 10 in a test process of heating the electrode assembly 10 according to example embodiments described in FIGS. 2 to 4 within a hot-box. P2 represents a temperature change in the electrode assembly in a test process of heating the electrode assembly according to the second comparative example, which is applied above to the test of FIG. 9, within the hot-box.

In a graph of FIG. 10, a heating test condition of the hot-box is identical to the heating test condition of the hot-box described above through FIG. 8.

Referring to P1 and P2 values, it may be identified that each of the electrode assemblies according to example embodiments and the second comparative example is maintained in a stable state even when heated to around 130 °C. Through this, it may be identified that an effect of preventing a short circuit by the insulating member having the non-adhesive surface is identical to an effect of preventing a short circuit by the existing adhesive insulating tape.

In other words, referring the test results shown in FIGS. 9 and 10, it may be identified that the electrode assemblies 10 and 10" to which the insulating members 120, 120', and 120" are applied according to example embodiments are greatly advantageous in terms of the capacity of the battery cell 1 while maintaining the effect of preventing the short circuit between electrode plates identically, compared to the masking part formed of the existing adhesive insulating tape.

In particular, when electrode plates forming the electrode assemblies 10 and 10" are composed of lithium metal, the insulating members 120, 120', and 120" according to example embodiments do not interfere with the involvement of lithium metal in a battery reaction, and thus, may prevent a decrease in the capacity of the battery cell 1 due to the forming of the masking part 111a. In addition, as inner surfaces of the insulating members 120, 120', and 120" are composed of the non-adhesive surface NA, the insulating members 120, 120', and 120" may be disposed on the lithium metal electrode plates with high reactivity in a chemically and physically stable manner.

Meanwhile, the battery cell 1 according to example embodiments may be used as a power source in various electronic devices, and the electronic device may be, for example, a laptop computer, a netbook, a tablet personal computer (PC), a mobile phone, a MP3 player, a wearable electronic device, a power tool, an electric vehicle (EV), a hybrid electric vehicle (HEV), a plug-in hybrid electric vehicle (PHEV), an electric bike (E-bike), an E-scooter, an electric golf cart, or an energy storage system (ESS) but is not limited thereto.

While various example embodiments of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned example embodiments may be implemented with some elements removed, and each example embodiment may be implemented in combination with each other.

### [Description of symbols]

1... Battery cell 10... Electrode assembly
20... Lead tab 30... Case
100... First electrode plate assembly 110... First electrode plate
111... Electrode plate body part 111a... Masking part
111b... Exposed part 112... First electrode tab
120, 120', 120"... Insulating member NA... Non-adhesive surface
200... Second electrode plate 210... Second electrode tab
300, 300'... Separator

## Claims

1. A battery cell comprising:
one or more first electrode plates;
one or more second electrode plates having opposite polarity to the one or more first electrode plates;
one or more separators disposed between the one or more first electrode plates and the one or more second electrode plates; and
one or more insulating members seated on the one or more first electrode plates,
wherein the one or more insulating members include a non-adhesive surface in contact with the one or more first electrode plates.

2. The battery cell of claim 1,
wherein at least a portion of the one or more first electrode plates is made of lithium or an alloy including lithium.

3. The battery cell of claim 2,
wherein the non-adhesive surface of the one or more insulating members is in contact with a portion made of lithium or an alloy including lithium in the one or more first electrode plates.

4. The battery cell of claim 1,
wherein an entire portion in contact with the one or more first electrode plates in the one or more insulating members is formed as the non-adhesive surface.

5. The battery cell of claim 1,
wherein the insulating member is composed of at least one of polyimide, polyprophylene, polyvinyl chloride, polyester, polyacetal, polyolefin, and polyethylene.

6. The battery cell of claim 1,
wherein the one or more first electrode plates include:
one or more masking parts on which the one or more insulating members are seated; and
an exposed part which is exposed to the separator,
wherein the one or more masking parts are formed along at least one edge of the one or more first electrode plates.

7. The battery cell of claim 6,
wherein the one or more insulating members have a loop-type structure in which a first insulating part facing one surface of the one or more first electrode plates and a second insulating part facing an opposite surface of the one surface of the one or more first electrode plates are connected continuously at both ends in a lengthwise direction.

8. The battery cell of claim 6,
wherein the one or more insulating members include:
a first insulating member disposed along a first edge from which an electrode tab protrudes in the first electrode plate; and
a second insulating member disposed along a second edge opposite to the first edge of the first electrode plate.

9. The battery cell of claim 8,
wherein the one or more insulating members further include
a third insulating member and a fourth insulating member disposed along a third edge and a fourth edge, respectively,
wherein the third edge and the fourth edge are connected to the first edge and the second edge in the first electrode plate, respectively,
wherein one end portion of each of the first to fourth insulating members covers a portion of another insulating member adjacent to the one end portion, and an opposite end portion of the one end portion of each of the first to fourth insulating members is covered by another insulating member adjacent to the opposite end portion.

10. The battery cell of claim 6,
wherein no adhesive material is applied to a portion in contact with the one or more masking parts in the one or more insulating members.

11. The battery cell of claim 6,
wherein the one or more insulating members include:
a fifth insulating member facing one surface of the one or more first electrode plates;
a sixth insulating member facing an opposite surface of the one surface of the one or more first electrode plates,
wherein the fifth insulating member and the sixth insulating member are separated from each other.

12. The battery cell of claim 11,
wherein the fifth insulating member and the sixth insulating member have a frame-type structure surrounding a perimeter of the exposed part.

13. The battery cell of claim 1,
wherein the first electrode plate is disposed to face one surface of a separator which is zigzag-folded and the second electrode plate is disposed to face an opposite surface of the one surface of the separator, wherein the one or more insulating members include
a first insulating member and a second insulating member disposed along two edges of the first electrode plate respectively and spaced apart from each other in a width direction of the separator.
